# FASCICULE DE BREVET EUROPEEN

(11) **EP 3 549 550 B1**
(45) Date de publication et mention de la délivrance du brevet: **22.09.2021**
(21) Numéro de dépôt: 19166350.9
(22) Date de dépôt: 29.03.2019
(51) Int. Cl.: A61C 13/01

(54) **PROCÉDE DE FABRICATION D'UNE PROTHÈSE DENTAIRE**
HERSTELLUNGSVERFAHREN EINES KÜNSTLICHEN GEBISSES
METHOD FOR MANUFACTURING A DENTURE

(30) Priorité: 04.04.2018 FR 1852929
(43) Date de publication de la demande: 09.10.2019
(73) Titulaire: TOUT DENTAIRE, 92500 Rueil Malmaison (FR)
(72) Inventeur: ATTALIN, Rémy, 92500 RUEIL MALMAISON (FR)
(74) Mandataire: Demulsant, Xavier

(56) Documents cités:
- FR-A1- 2 192 793
- JP-A- H0 194 850
- US-A- 4 654 006
- US-A- 6 077 075
- US-A1- 2007 009 852
- US-A1- 2018 042 709

## Description

L'invention a trait au domaine des appareils et des prothèses dentaires, et plus particulièrement à la fabrication d'un appareil dentaire amovible.

Un individu complètement édenté ne peut plus mâcher les aliments. Un individu partiellement édenté mâche avec les dents lui restant, ce qui a tendance à user prématurément ces dernières.

Une des solutions, pour permettre à un individu édenté de mâcher correctement les aliments, est de lui proposer de porter un appareil dentaire amovible remplaçant les dents manquantes.

Par appareil dentaire amovible, il est fait référence à un appareillage de substitution des dents, qui repose sur les gencives, de sorte à pouvoir être positionné et retiré de la bouche par l'utilisateur lui-méme.

Les appareils dentaires amovibles sont composés d'une ou deux prothèses dentaires amovibles

Par prothèse dentaire, l'on fait référence à un ensemble de dents artificielles que l'on fixe sur les dents qui restent, dans le but de reformer une arcade dentaire complète.

Les prothèses amovibles peuvent être partielles ou complètes. Les prothèses partielles sont destinées à se substituer à une ou plusieurs dents manquantes, lorsqu'une mâchoire est encore munie de dent. Les prothèses partielles s'accrochent en général sur les dents restantes. Un tel type de prothèse est usuellement dénommé "bridge" ou "pont dentaire". Les prothèses complètes visent à remplacer l'intégralité des dents d'une mâchoire, la mâchoire étant alors complètement édentée. Un tel type de prothèse est usuellement dénommé "dentier",

Les prothèses dentaires amovibles sont généralement fabriquées sur mesure par un professionnel. La fabrication d'une prothèse dentaire est classiquement un protocole comprenant une succession d'étapes.

En premier lieu, le praticien professionnel, typiquement un dentiste, réalise une prise d'empreinte, c'est-à-dire un moulage des dents, du relief de la mâchoire et de ses tissus de revêtement. La prise d'empreinte permet la réalisation d'un moule, dénommé "empreinte". L'empreinte ainsi réalisée, qualifiée d'empreinte primaire, est envoyée
dans un laboratoire qui fabrique un porte-empreinte individuel adapté à l'anatomie de la bouche du patient. A l'aide du porte-empreinte individuel, le dentiste effectue une empreinte secondaire sur la bouche du patient. Une telle empreinte permet au laboratoire de façonner un modèle en plâtre des mâchoires du patient. Puis un relevé de l'occlusion dentaire est réalisé par le dentiste, le terme "occlusion" référant à la relation des dents entre elles lorsque les mâchoires sont fermées. Un tel relevé, également dénommé enregistrement, est réalisé, en faisant mordre le patient dans une plaque en cire. Après choix de la teinte et de l'implantation par le patient, des dents artificielles sont montées sur un modèle de la prothèse, lequel est ensuite essayé en bouche par le patient. Une fois le modèle validé, la prothèse définitive est réalisée par coulage d'une résine, les dents artificielles étant implantées, soit en étant disposées préalablement au sein du moule de coulée, ou bien sont collées après réalisation de la coulée. Un essai de la prothèse réalisée est ensuite réalisé par le patient afin de permettre la réalisation d'adaptations finales par le laboratoire. De cette manière, la prothèse est morphologiquement adaptée à la mâchoire du patient.

Le protocole de réalisation de la prothèse décrit ci-dessus impose à l'individu de se rendre plusieurs fois chez un professionnel compétent. Par ailleurs, entre chaque séance, un délai est requis pour permettre au laboratoire d'avancer dans la fabrication de la prothèse.

La fabrication de la prothèse est ainsi perçue par le patient comme un processus long, et pénible. De plus, entre le premier rendez-vous chez le professionnel et la réception définitive de la prothèse, il se passe une durée de plusieurs mois pendant laquelle l'individu est contraint à continuer à manger des aliments mous ou bien à porter une prothèse provisoire, non adaptée à sa mâchoire, et par conséquent souvent inconfortable.

FR 2 192 793 A1 divulgue un procédé de fabrication d'une prothèse dentaire amovible comprenant une étape de thermoformage d'un séparateur entre un modèle de la mâchoire supérieure et un porte-empreinte portant un jeu de fausses dents.

La demande se propose de répondre aux inconvénients précités. Un premier objectif est de proposer un procédé de fabrication d'un appareil dentaire, un tel procédé permettant d'accélérer la fabrication d'un appareil dentaire.

Un deuxième objectif est de proposer un procédé de fabrication d'un appareil dentaire, un tel procédé pouvant être mis en œuvre sans intervention d'un professionnel, notamment un professionnel de santé, l'appareil obtenu par le procédé permettant à un individu édenté de mâcher des aliments avec toute sa mâchoire.

Un troisième objectif est de proposer un procédé de fabrication d'un appareil dentaire léger et flexible, améliorant le confort.

Un quatrième objectif est de proposer un appareil dentaire réalisé par le procédé tel que présenté ci-dessus.

A cet effet, il est proposé, en premier lieu, un procédé de fabrication d'une prothèse amoviblo destinée à être ajustée à une première mâchoire édentée d'une bouche d'un individu, la bouche de l'individu comprenant une deuxième mâchoire, le procédé comprenant une étape de prise d'empreinte de la première mâchoire et de la deuxième mâchoire, une étape de coulage d'un matériau durcissant dans l'empreinte réalisée, de sorte à obtenir une un premier modèle de la première mâchoire, le premier modèle comprenant une portion gingivale et une portion palatine reproduisant respectivement les gencives et le palais de la première mâchoire, une étape de thermoformage d'une plaque sur un premier modèle, reproduction de la première mâchoire, de sorte que la plaque recouvre une portion gingivale et une portion palatine du premier modèle, une étape de réalisation d'un moulage de la portion gingivale et de la portion palatine, une étape de coulée d'un matériau de moulage au sein du moulage réalisé, de sorte à former une partie de liaison, une étape de collage de la partie de liaison sur une partie dentée, une étape de repositionnement de la prothèse sur la première mâchoire.

Selon d'autres modes de réalisation, le procédé comprend :
- avant l'étape de thermoformage, une étape de sélection d'une partie dentée parmi plusieurs parties dentées prédéterminées présentant des dimensions différentes, la partie dentée sélectionnée étant celle ayant la géométrie la plus proche de la géométrie de la première mâchoire ;
- après l'étape de collage, une étape de finition de la partie dentée avec la partie de liaison, une résine étant disposée sur des espaces vides subsistant entre la partie dentée et la partie de liaison ;
- après l'étape de repositionnement, une étape de rebasage de la partie de liaison ;
- après l'étape de sélection et avant l'étape de collage, une étape de pré-adaptation de la partie dentée à la deuxième mâchoire comprenant une phase de marquage de la partie dentée de sorte à identifier des dents artificielles empêchant la réalisation d'un contact réparti sur toute la partie dentée, lors de la mise en contact de la partie dentée sur le modèle de la deuxième mâchoire étant réalisé, une phase de réduction desdites dents artificielles.

Il est proposé, en deuxième lieu, un procédé de fabrication d'un appareil dentaire amovible, comprenant une étape de fabrication d'une première prothèse telle que présentée ci-dessus, destinée à une première mâchoire, la première mâchoire étant une mâchoire supérieure, une étape de fabrication d'une deuxième prothèse destinée à une deuxième mâchoire telle que présentée ci-dessus, destinée à une première mâchoire, la deuxième mâchoire étant une mâchoire inférieure, l'étape de repositionnement comprend une phase de mise en place la première prothèse sur la première mâchoire et/ou de la deuxième prothèse sur la deuxième mâchoire, et une phase de plaquage contre la partie dentée de la première prothèse ou de la deuxième prothèse d'un plateau de réglage.

Il est proposé, en troisième lieu, une prothèse comprenant une prothèse dentaire amovible munie d'une partie dentée, et une partie de liaison, la prothèse dentaire amovible étant fabriquée par la mise en oeuvre du procédé présenté ci-dessus.

Il est proposé, en quatrième lieu, un ensemble comprenant une prothèse dentaire, un élastomère, des porte-empreintes, une partie dentée, une résine dentaire, un matériau durcissant, une plaque thermoformable.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 représente une vue schématique en perspective d'un appareil dentaire selon le premier mode de réalisation,
- la figure 2 est une vue schématique en perspective des mâchoires d'un individu, la première mâchoire, édentée étant munie de la prothèse dentaire de la figure 1,

- la figure 3 représente une vue schématique en perspective d'une étape de prise d'empreinte,
- la figure 4 représente une vue schématique en perspective d'une étape de coulage dans une empreinte,
- la figure 5 représente une vue schématique en perspective d'une étape de sélection d'une partie dentée, en phase de marquage,
- la figure 6 représente une vue schématique en perspective d'une étape de thermoformage,
- la figure 7 représente une vue schématique en perspective d'une étape de moulage d'un modèle muni d'une plaque thermoformée,
- la figure 8 représente une vue schématique en perspective d'une étape de coulée d'une partie de liaison,
- la figure 9 représente une vue schématique en perspective d'une étape de collage,
- la figure 10 représente un diagramme synoptique de la réalisation d'un appareil dentaire selon un premier mode de réalisation,
- la figure 11 représente une vue schématique d'un plateau de positionnement,
- la figure 12 représente une vue schématique d'une phase d'une étape de positionnement selon le deuxième mode de réalisation,
- la figure 13 représente une vue schématique d'une phase d'étape de positionnement selon le deuxième mode de réalisation.

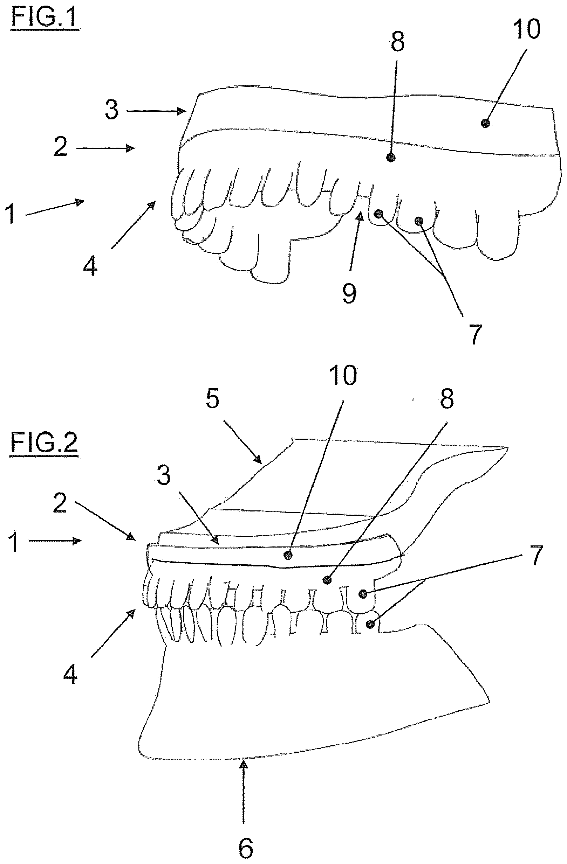

L'on se réfère à la figure 1 représentant un appareil **1** dentaire amovible comprenant une partie **3** de liaison, et une partie **4** dentée, destinée à être solidarisée à la partie **3** de liaison.

Dans un premier mode de réalisation représenté sur les figures 1 à 9, l'appareil **1** dentaire est une prothèse **2** dentaire destinée à combler uniquement une première mâchoire édentée d'un individu.

Selon le mode de réalisation représenté, la première mâchoire **5** est une mâchoire supérieure.

Dans d'autres modes de réalisation non représentés, la première mâchoire **5** est une mâchoire inférieure.

Dans un deuxième mode de réalisation décrit en détail plus loin dans la description, l'appareil **1** dentaire amovible comprend une prothèse **2** destinée à combler une première mâchoire **5** édentée, par exemple la mâchoire supérieure édentée, et une deuxième mâchoire **6** édentée inférieure.

Dans les modes de réalisation représentés, la prothèse **2** est destinée à un être humain, mais dans d'autres modes de réalisation non représentés, la prothèse **2** est destinée à combler la mâchoire d'un animal, ou une mâchoire artificielle reproduisant une mâchoire d'un individu ou d'un animal.

La partie **4** dentée reproduit une arcade dentaire et présente sensiblement une forme d'arc-de-cercle. La partie **4** dentée comprend des dents **7** artificielles, implantées sur une base **8**. La base **8** présente la coloration d'une gencive, et présente une rigole (non représenté). La partie **4** dentée est destinée à être apparente lorsqu'un patient **P** sourit ou ouvre la bouche, et présente un aspect le plus proche possible de dents réelles.

La partie **3** de liaison comprend une zone **9** palatine sensiblement complémentaire à un palais, et une zone **10** gingivale sensiblement complémentaire aux gencives de la première mâchoire **5**. De cette manière, l'adhésion de la prothèse **2** est assurée par succion, garantissant au patient une bonne élocution et lui permettant de conserver la capacité de mastication.

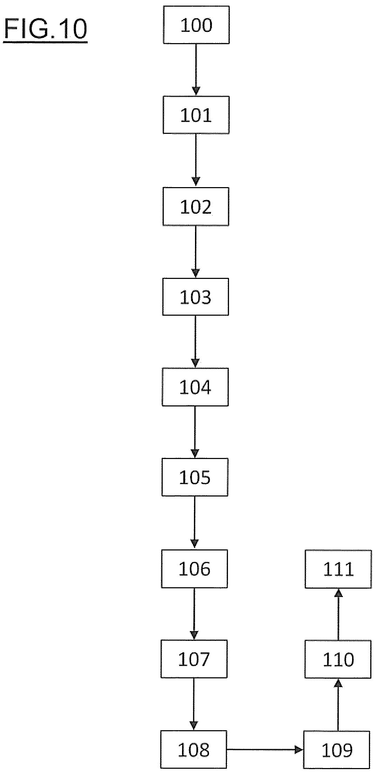

L'on se réfère à présent aux figures 2 à 9, illustrant des étapes de fabrication d'un appareil dentaire selon le premier mode de réalisation de l'appareil dentaire, comprenant une première prothèse. Un schéma synoptique du procédé illustré figure 10 donne un exemple de séquencement des étapes permettant la fabrication d'une telle prothèse d'un appareil 1 dentaire selon le premier mode de réalisation.

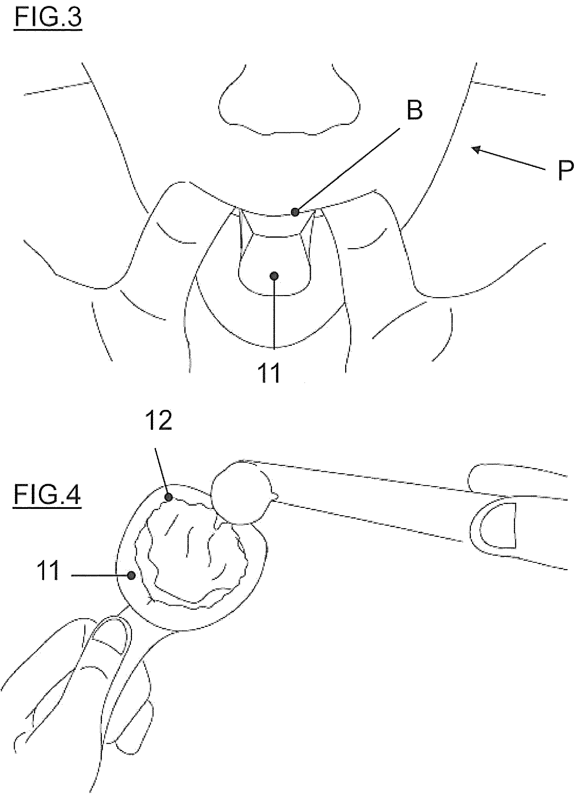

Dans le mode de réalisation représenté, le procédé comprend une étape **100** de prise d'une empreinte de la première mâchoire **5**, et de la deuxième mâchoire **6**. Une telle étape **100** de prise d'une empreinte, représentée figure 3, est identique à la réalisation une empreinte réalisée chez un dentiste.

Dans une telle étape, un porte-empreinte **11** présentant une forme générale sensiblement en U et comprenant une gouttière, reçoit une pâte à empreinte. Le porte-empreinte **11** et la pâte à empreinte sont ensuite insérés dans la bouche **B** du patient P, contre la première mâchoire **5** édentée, de sorte que la première mâchoire **5** édentée s'enfonce dans la pâte à empreinte. Une fois la pâte à empreinte durcie, le porte-empreinte **11** et la pâte à empreinte sont retirés de la bouche **B.** La pâte à empreinte présente alors une empreinte **12** de la mâchoire. Une telle étape offre l'avantage d'être réalisable par le patient **P** lui-même.

Dans le mode de réalisation représenté, la pâte à empreinte est un élastomère, par exemple une composition à base de silicone. Dans d'autres modes de réalisation non représenté, le matériau élastomère appartient à la famille des hydrocolloïdes.

Le procédé comprend une étape **101** de coulage d'un matériau durcissant dans les empreintes **12** réalisées, représentée figure **4**. Une fois que le matériau durcissant a durci, le porte-empreinte **11** et la pâte à empreinte sont désolidarisés du matériau durcissant. Le matériau durcissant forme alors un premier modèle **13,** réplique de la première mâchoire **5** édentée de l'individu. Une telle étape est avantageusement opérée sur la deuxième mâchoire **6**, qui dans le premier mode de réalisation comporte encore des dents, de sorte à former un deuxième modèle **14.**

Le premier modèle **13** comprend une portion **15** gingivale modélisant les gencives édentées de la mâchoire supérieure, et une portion **16** palatine modélisant le palais de la mâchoire supérieure.

Le deuxième modèle **14** comprend une portion **17** dentaire modélisant les dents de la mâchoire inférieure.

Dans une étape **102** de sélection, une partie **4** dentée est avantageusement sélectionnée parmi une pluralité de parties **4** dentées de taille différentes. Avantageusement, la sélection est opérée entre trois parties **4** dentées différentes.

La sélection est avantageusement réalisée en positionnant la partie **4** dentée contre le premier modèle **13** édentée à équiper, de sorte à choisir la partie **4** dentée qui présente la dimension la plus proche de la morphologie de la première mâchoire **5**, à équiper.

L'étape **102** de sélection est réalisée de préférence en début de procédé, juste après l'étape **101** de coulage et avant l'étape **107** de collage.

Selon le mode de réalisation représenté, une fois l'étape **102** de sélection effectuée, une étape **103** de pré-adaptation a lieu.

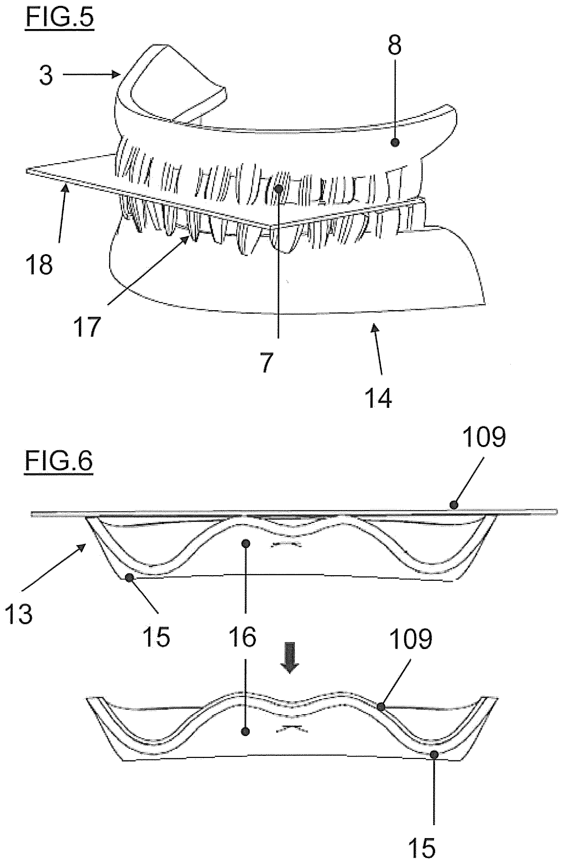

Dans une telle étape **103** de pré-adaptation, dans une phase de marquage, représentée figure 5, la partie **4** dentée sélectionnée, est positionnée contre le deuxième modèle **14,** une feuille **18** de papier munie d'une substance colorante, par exemple une feuille de papier carbone étant disposée entre les dents **7** artificielles de la partie **4** dentée, et la portion **17** dentaire du deuxième modèle **14.** En maintenant un tel contact, la partie **4** dentée est déplacée contre le deuxième modèle **14**, la feuille de papier colorante restant immobile. De cette manière, les parties de la portion **17** dentaire qui présentent une taille trop importantes par rapport à la mâchoire inférieure sont colorisées et donc détectées.

Une telle étape **103** de pré-adaptation permet de modéliser l'occlusion dentaire, et de localiser les parties qui empêcheraient la réalisation d'une occlusion optimale, c'est-à-dire l'obtention d'un contact réparti sur l'intégralité des dents **7** artificielles.

Avantageusement, les parties empêchant l'obtention d'une occlusion optimale, sont ensuite éliminées, par exemple par meulage, fraisage, ou limage, lors d'une phase de réduction.

Les phases de marquage et de réduction sont répétées, jusqu'à ce la phase de marquage ait pour résultat de produire une coloration de l'ensemble des dents **7** artificielles de la partie **4** dentée, indiquant la réalisation d'une occlusion dentaire optimale,

Une telle étape **103** de pré-adaptation a lieu avant l'étape **107** de collage.

Dans une étape **104** de thermoformage, représentée figure 6, une plaque **19** thermoformable préalablement déposée sur la portion **15** gingivale du premier modèle **13,** est rapprochée d'une source de chaleur de manière à être rendue malléable. Lors de la fusion de la plaque **19,** l'écoulement a lieu le long de la portion **15** gingivale, et la portion **16** palatine. A la fin de l'écoulement, la plaque **19** épouse la portion **15** gingivale et la portion **16** Une telle étape permet de modéliser sur le premier modèle l'emprise par la partie **3** de liaison à former.

Une fois la fusion réalisée, les éléments de la plaque **19** dépassant de la portion **15** gingivale, et s'étalant en dehors du premier modèle **13** sont découpées et retirées.

Avantageusement, la plaque **19** est une feuille d'une épaisseur prédéterminée, par exemple autour de deux millimètres.

Avantageusement, la plaque **19** est réalisée en cire thermoformable, ce qui assure une coulabilité optimale.

Avantageusement, la source de chaleur est un sèche-cheveux, mais selon d'autres modes de realisation, la source de chaleur est un bec bunsen, ou une résistance électrique chauffante.

Une étape **105** de réalisation d'un moulage **20** de la zone **10** gingivale et de la zone **9** palatine munie de la plaque **19** thermoformée est effectuée en plaquant un volume d'un matériau de moulage contre le premier modèle **13.** Il est ainsi obtenu un creux **21** au sein du matériau de moulage, qui correspond au négatif de la partie **3** de liaison à réaliser.

Avantageusement, le matériau de moulage est la pâte d'empreinte, telle qu'utilisée dans l'étape **100** de prise d'empreinte.

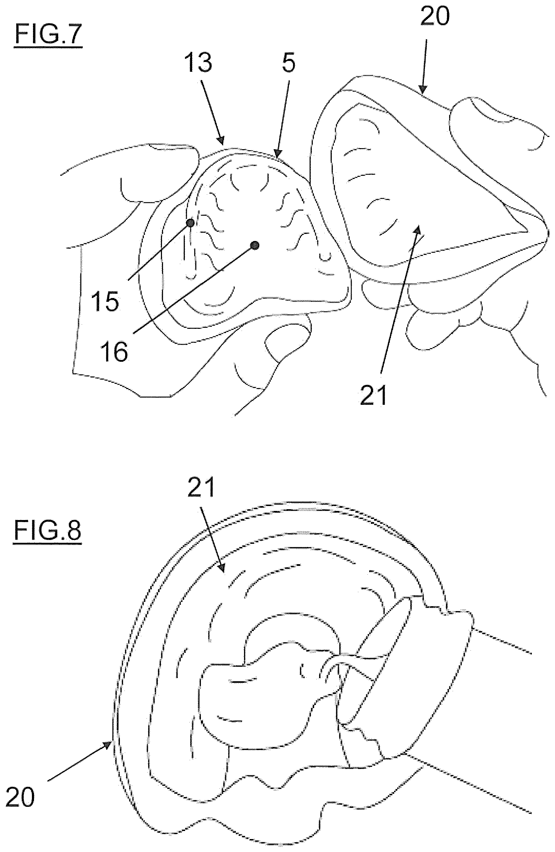

Une étape **106** de coulée, représentée figure 8 d'une résine dentaire liquide au sein du creux **21,** a lieu, de sorte à permettre d'obtenir la partie **3** de liaison. La résine dentaire est liquide, mais se durcit après un temps d'attente. Une fois la résine solidifiée, il est possible de démouler la partie **3** de liaison du creux **21.**

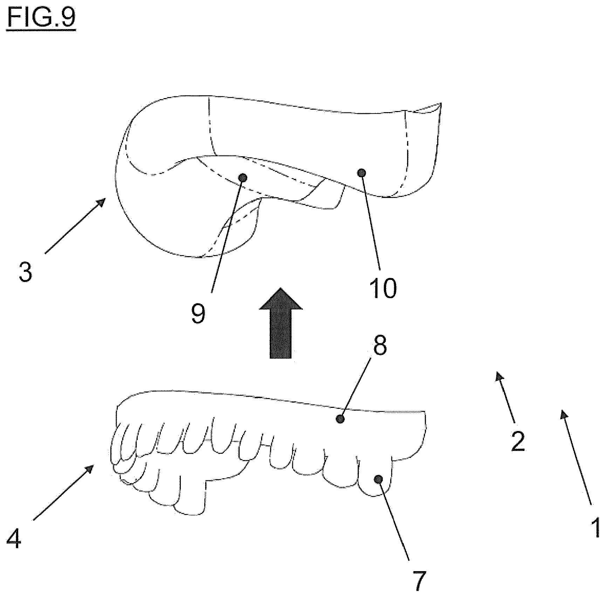

Puis, comme représenté figure 9, une étape **107** de collage a lieu entre la base **8** de la partie **4** dentée et la partie **3** de liaison, le collage étant réalisé en introduisant de la colle au sein de la rigole (non représentée), puis en positionnant la partie **3** de liaison contre la base **8** en faisant correspondre la base **8** et la partie **3** de liaison, qui définissent tous les deux un arc-de-cercle sensiblement équivalent à l'arc-de-cercle défini par une arcade dentaire. De cette manière, tout décalage entre la base **8** et la partie **3** de liaison est limité.

Avantageusement, le collage est réalisé à l'aide de la résine utilisée dans l'étape **106** de coulée. Une telle résine n'a pas une prise immédiate, ce qui laisse du temps pour repositionner la partie **4** dentée sur la partie **3** de liaison, une telle opération étant réalisée lors d'une étape **108** de repositionnement.

Une telle étape **108** de repositionnement est effectuée en insérant la prothèse **2** dans la bouche **B** du patient **P.** Puis, le patient **P** serre les mâchoires **5, 6,** afin de contrôler le bon positionnement de la partie **4** dentée. Dans le cas où le serrage des mâchoires **5, 6** donne une sensation d'inconfort ou de douleur, il est possible de manipuler la partie **4** dentée sur la partie **3** de liaison, de manière à les repositionner entre elles, tant que la résine n'a pas durcie.

Une telle étape **108** de repositionnement est réalisée directement par le patient **P,** qui peut s'aider à l'aide d'un miroir, ou par directement par le praticien.

Des espaces laissés libres lors de l'étape **107** de collage entre la base **8** et la partie **3** de liaison sont comblés lors une étape **109** de finition, par exemple avec la résine utilisée dans l'étape **106** de coulée, et dans l'étape **107** de collage. L'aspect extérieur de la prothèse présente ainsi un aspect le plus fidèle possible à une vraie dentition.

Dans une étape **110** de rebasage, préférentiellement réalisée à la fin du procédé de fabrication, la prothèse dentaire est munie à l'intérieur d'un matériau pour permettre d'ajuster la prothèse réalisée à la bouche **B** du patient P. Le rebasage est un procédé connu et est par exemple décrit dans la demande FR 3 053 885 établie au nom de la demanderesse.

Selon un mode de réalisation avantageux, une fois l'étape **110** de rebasage effectuée, une étape **111** de réadaptation a lieu.

Dans une telle étape **111** de réadaptation, lors d'une phase de marquage, la partie **4** dentée, collée sur la partie **3** de liaison, est positionnée contre le deuxième modèle **14,** une feuille **18** de papier munie d'une substance colorante, par exemple une feuille de papier carbone, est disposée entre les dents **7** artificielles de la partie **4** dentée, et la portion **17** dentaire du deuxième modèle **14.** En maintenant un tel contact, la partie **4** dentée est déplacée contre le deuxième modèle **14,** la feuille de papier colorante restant immobile. De cette manière, les parties de la portion **17** dentaire qui présentent une taille trop importantes par rapport à la mâchoire inférieure sont colorisées et détectées, puis dans une phase de réduction où les parties de la portion 17 dentaire colorisé sont éliminés.

Une telle étape **111** de réadaptation permet d'affiner le réglage de l'occlusion, tel que réalisé dans l'étape **103** de préadaptation.

Dans le deuxième mode de réalisation, l'appareil **1** dentaire comprend une première prothèse **2,** destinée à équiper une première mâchoire **5** édentée, et une deuxième prothèse **2,** destinée à équiper une deuxième mâchoire **6** édentée. De cette manière, une personne complètement édentée peut réaliser elle-même ses prothèses **2.**

Dans une telle situation, chacune des prothèses **2** est fabriquée successivement en appliquant par exemple les étapes ci-dessus, à l'exception de l'étape **103** de pré-adaptation, puisque l'utilisateur utilisant l'appareil **1** dentaire selon le deuxième mode de réalisation est complètement édenté.

Dans le mode de réalisation représenté, il est avantageux d'effectuer l'étape **108** de repositionnement par l'utilisation d'un plateau 22 de réglage, car le patient **P** est complètement édentée, et ne peut pas positionner la prothèse en cours de réalisation en serrant les mâchoires **5, 6** édentées.

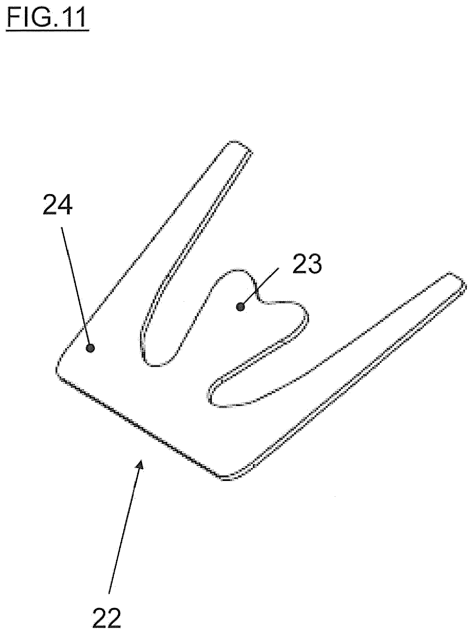

Comme représenté figure **11****,** le plateau **22** de réglage, par exemple un plan de Fox, est une plaque sensiblement plane, comprenant une partie **23** intra-orale, arquée et destinée à être insérée dans la bouche **B** du patient **P,** et une partie **24** extra-orale destinée à être en dehors de la bouche **B** du patient **P,** lorsque la partie **23** intra-orale est dans la bouche **B** du patient **P.** Quand le plateau **22** de réglage est plaqué contre la partie **4** dentée d'une des prothèses **2,** le plan formé par la partie **4** dentée est visualisable par l'orientation de la partie **24** extra-orale.

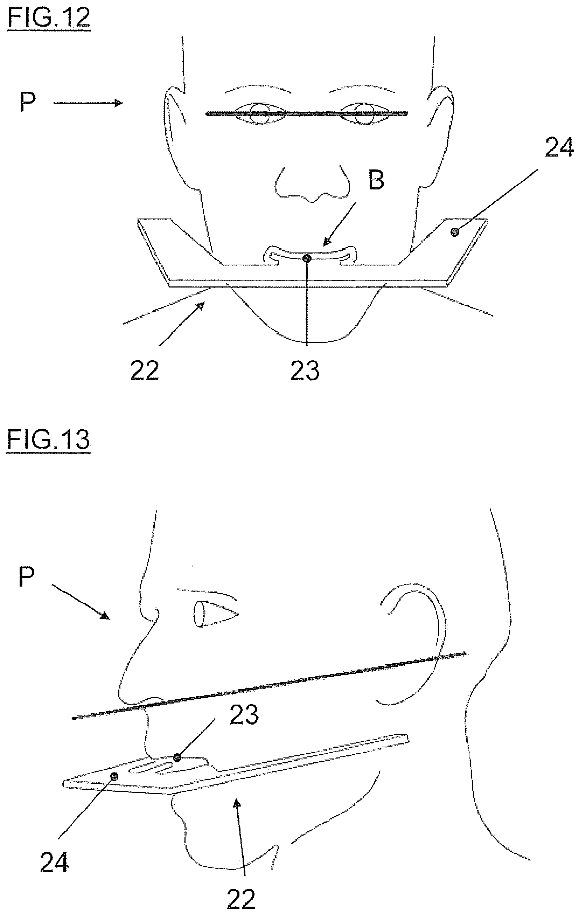

Aussi, lors de l'étape **108** de repositionnement, le patient **P** plaque la partie **23** intra-orale contre la partie **4** dentée. Une fois le plateau **22** de positionnement mis en position contre une partie **4** dentée, une vérification consiste à s'assurer que la partie **24** extra-orale s'étend dans un plan qui est parallèle à une ligne fictive reliant les pupilles du patient **P.** Une telle vérification est représentée figure 12. Dans une deuxième vérification, le parallélisme entre la partie **24** extra-orale, et à une ligne reliant le tragus jusqu'au point sous nasal est contrôlé, comme représenté figure 13.

Un tel contrôle visuel est réalisable par le patient **P** lui-même, ou par le praticien. Dans le cas où l'un des parallélismes décrits ci-dessus n'est pas obtenu, le patient **P** ou le praticien repositionne la partie **4** dentée sur la partie **3** de liaison, de sorte à atteindre le parallélisme recherché.

L'appareil **1** dentaire, et son procédé d'obtention présentent plusieurs avantages comme par exemple:
- coût de fabrication limité par rapport à des appareils dentaires réalisés chez un prothésiste,
- temps de fabrication réduit,
- possibilité de fabrication de l'appareil 1 dentaire par le patient P lui-même, la fabrication étant réalisable sans nécessiter une formation professionnelle préalable, et avec un nombre restreint d'outil.
- le procédé de fabrication est réalisable à partir d'un kit, comprenant au moins une partie dentée, une résine dentaire, au moins un porte-empreinte **11**, un matériau d'empreinte, un plâtre dentaire, et dans certains cas un plateau **22** de réglage.

## Revendications

1. Procédé de fabrication d'une prothèse **(2)** amovible destinée à être ajustée à une première mâchoire **(5)** édentée d'une bouche **(B)** d'un individu, la bouche **(B)** de l'individu comprenant une deuxième mâchoire **(6),** le procédé comprenant :
• une étape **(100)** de prise d'empreinte **(12)** de la première mâchoire **(5)** et de la deuxième mâchoire **(6)**
• une étape **(101)** de coulage d'un matériau durcissant dans l'empreinte **(12)** réalisée, de sorte à obtenir un premier modèle **(13)** de la première mâchoire **(5),** le premier modèle **(13)** comprenant une portion **(15)** gingivale et une portion **(16)** palatine reproduisant respectivement les gencives et le palais de la première mâchoire **(5),**
• une étape **(104)** de thermoformage d'une plaque **(19)** déposée sur la portion gingivale **(15)** du premier modèle **(13),** reproduction de la première mâchoire **(5)**, de sorte que la plaque **(19)** recouvre la portion **(15)** gingivale et la portion **(16)** palatine du premier modèle **(13),**
• une étape **(105)** de réalisation d'un moulage **(20)** de la portion **(15)** gingivale et de la portion **(16)** palatine, en plaquant un volume d'un matériau de moulage contre le premier modèle **(13),** formant un creux **(21)** au sein du matériau de moulage, creux **(21)** qui correspond au négatif d'une partie **(3)** de liaison,
• une étape **(106)** de coulée d'un matériau de moulage au sein du creux **(21)** réalisé, de sorte à former la partie **(3)** de liaison,
• une étape **(107)** de collage de la partie **(3)** de liaison sur une partie **(4)** dentée,
• une étape **(108)** de repositionnement de la prothèse **(2)** sur la première mâchoire **(5)**.

2. Procédé selon la revendication précédente, **caractérisé en ce qu'**il comprend, avant l'étape **(104)** de thermoformage, une étape **(102)** de sélection d'une partie **(4)** dentée parmi plusieurs parties **(4)** dentées prédéterminées présentant des dimensions différentes, la partie **(4)** dentée sélectionnée étant celle ayant la géométrie la plus proche de la géométrie de la première mâchoire **(5).**

3. Procédé selon la revendication 1 ou la revendication 2, **caractérisé en ce qu'**il comprend après l'étape **(107)** de collage, une étape **(109)** de finition de la partie **(4)** dentée avec la partie **(3)** de liaison, une résine étant disposée sur des espaces vides subsistant entre la partie **(4)** dentée et la partie **(3)** de liaison.

4. Procédé selon l'une quelconque des revendications précédentes, **caractérisé en ce qu'**il comprend, après l'étape **(108)** de repositionnement, une étape **(110)** de rebasage de la partie **(3)** de liaison.

5. Procédé selon l'une quelconque des revendications de 2 à 4, **caractérisé en ce qu'**il comprend après l'étape **(102)** de sélection, et avant l'étape **(107)** de collage, une étape **(103)** de pré-adaptation de la partie **(4)** dentée à la deuxième mâchoire **(6)** comprenant :
• une phase de marquage de la partie **(4)** dentée de sorte à identifier des dents **(7)** artificielles empêchant la réalisation d'un contact réparti sur toute la partie **(4)** dentée, lors de la mise en contact de la partie **(4)** dentée sur le modèle de la deuxième mâchoire **(6),**
• une phase de réduction desdites dents **(7)** artificielles.

6. Procédé de fabrication d'un appareil **(1)** dentaire amovible, comprenant les étapes suivantes:
• une étape de fabrication d'une première prothèse **(2)** destinée à une première mâchoire **(5)** selon l'une quelconque des revendications de 1 à 4, la première mâchoire **(5)** étant une mâchoire supérieure,
• une étape de fabrication d'une deuxième prothèse destinée à une deuxième mâchoire **(6)** selon l'une quelconque des revendications de 1 à 4, la deuxième mâchoire **(6)** étant une mâchoire inférieure,
le procédé étant **caractérisé en ce que** l'étape **(108)** de repositionnement comprend les phases suivantes:
• mise en place de la première prothèse sur la première mâchoire **(5)** et/ou de la deuxième prothèse sur la deuxième mâchoire **(6),**
• plaquage d'un plateau **(22)** de réglage contre la partie **(4)** dentée de la première prothèse ou de la deuxième prothèse.

## Patentansprüche

1. Herstellungsverfahren einer abnehmbaren Prothese (2), die dazu bestimmt ist, an einen ersten zahnlosen Kiefer (5) eines Mundes (B) einer Person angepasst zu werden, wobei der Mund (B) der Person einen zweiten Kiefer (6) umfasst, wobei das Verfahren umfasst:
• einen Abnahmeschritt (100) des Abdrucks (12) des ersten Kiefers (5) und des zweiten Kiefers (6)
• einen Gussschritt (101) eines härtenden Materials in dem realisierten Abdruck (12) derart, dass ein erstes Modell (13) des ersten Kiefers (5) erhalten wird, wobei das erste Modell (13) einen Zahnfleisch-Abschnitt (15) und einen Gaumenabschnitt (16) umfasst, die jeweils das Zahnfleisch und den Gaumen des ersten Kiefers (5) wiedergeben,
• einen Wärmeformungsschritt (104) einer Platte (19), die auf dem Zahnfleisch-Abschnitt (15) des ersten Modells (13) aufgebracht wird, Abbildung des ersten Kiefers (5) derart, dass die Platte (19) den Zahnfleisch-Abschnitt (15) und den Gaumenabschnitt (16) des ersten Modells (13) abdeckt,
• einen Realisierungsschritt (105) eines Abformens (20) des Zahnfleisch-Abschnitts (15) und des Gaumenabschnitts (16) durch Drücken eines Volumens eines Abformmaterials gegen das erste Modell (13), durch Formen einer Vertiefung (21) innerhalb des Abformmaterials, wobei die Vertiefung (21) dem Negativ eines Verbindungsteils (3) entspricht,
• einen Gießschritt (106) eines Abformmaterials innerhalb der realisierten Vertiefung (21) derart, dass der Verbindungsteil (3) geformt wird,
• einen Verklebungsschritt (107) des Verbindungsteils (3) auf einem gezahnten Teil (4),
• einen Neupositionierungsschritt (108) der Prothese (2) auf dem ersten Kiefer (5).

2. Verfahren gemäß dem voranstehenden Anspruch, **dadurch gekennzeichnet, dass** es vor dem Wärmeformungsschritt (104) einen Auswahlschritt (102) eines gezahnten Teils (4) aus mehreren vorbestimmten gezahnten Teilen (4) umfasst, die unterschiedliche Abmessungen aufweisen, wobei der ausgewählte gezahnte Teil (4) derjenige ist, der die Geometrie aufweist, die der Geometrie des ersten Kiefers (5) am nächsten ist.

3. Verfahren gemäß Anspruch 1 oder Anspruch 2, **dadurch gekennzeichnet, dass** es nach dem Verklebungsschritt (107) einen Endbearbeitungsschritt (109) des gezahnten Teils (4) mit dem Verbindungsteil (3) umfasst, wobei ein Harz auf den Freiräumen angeordnet wird, die zwischen dem gezahnten Teil (4) und dem Verbindungsteil (3) verbleiben.

4. Verfahren gemäß irgendeinem der voranstehenden Ansprüche, **dadurch gekennzeichnet, dass** es nach dem Neupositionierungsschritt (108) einen Umbasierungsschritt (110) des Verbindungsteils (2) umfasst.

5. Verfahren gemäß irgendeinem der Ansprüche 2 bis 4, **dadurch gekennzeichnet, dass** es nach dem Auswahlschritt (102) und vor dem Verklebungsschritt (107) einen Vorab-Anpassungsschritt des gezahnten Teils (4) an den zweiten Kiefer (6) umfasst, umfassend:
• eine Kennzeichnungsphase des gezahnten Teils (4) derart, dass künstliche Zähne (7) identifiziert werden, die die Realisierung eines auf den gesamten gezahnten Teil (4) verteilten Kontakts beim Kontaktieren des gezahnten Teils (4) auf dem Modell des zweiten Kiefers (6) verhindern,
• eine Reduzierungsphase der genannten künstlichen Zähne (7).

6. Herstellungsverfahren eines abnehmbaren Zahnersatzes (1), umfassend die folgenden Schritte:
• einen Herstellungsschritt einer ersten Prothese (2), die für einen ersten Kiefer (5) bestimmt ist, gemäß irgendeinem der Ansprüche 1 bis 4, wobei der erste Kiefer (5) ein Oberkiefer ist,
• einen Herstellungsschritt einer zweiten Prothese, die für einen zweiten Kiefer (6) bestimmt ist, gemäß irgendeinem der Ansprüche 1 bis 4, wobei der zweite Kiefer (6) ein Unterkiefer ist,
wobei das Verfahren **dadurch gekennzeichnet ist, dass** der Neupositionierungsschritt (108) die folgenden Phasen umfasst:
• Einsetzen der ersten Prothese auf den ersten Kiefer (5) und/oder der zweiten Prothese auf den zweiten Kiefer (6),
• Drücken einer Einstellplatte (22) gegen den gezahnten Teil (4) der ersten Prothese oder der zweiten Prothese.

## Claims

1. A method for manufacturing a removable prosthesis (2) intended to be fitted to a first toothless jaw (5) of a mouth (B) of an individual, the mouth (B) of the individual comprising a second jaw (6), the method comprising:
• a step (100) of taking an impression (12) of the first jaw (5) and of the second jaw (6)
• a step (101) of casting a curing material into the impression (12) made, so as to obtain a first model (13) of the first jaw (5), the first model (13) comprising a gingival portion (15) and a palatine portion (16) respectively reproducing the gingivae and the palate of the first jaw (5),
• a step (104) of thermoforming a plate (19) deposited on the gingival portion (15) of the first model (13), reproducing the first jaw (5), so that the plate (19) covers the gingival portion (15) and the palatine portion (16) of the first model (13),
• a step (105) of making a moulding (20) of the gingival portion (15) and of the palatine portion (16), by plating a volume of a moulding material against the first model (13), forming a hollow (21) within the moulding material, hollow (21) which corresponds to the negative of a connection part (3),
• a step (106) of casting a moulding material within the hollow (21) made, so as to form the connection part (3),
• a step (107) of bonding the connection part (3) onto a toothed part (4),
• a step (108) of repositioning the prosthesis (2) on the first jaw (5).

2. The method according to the previous claim, **characterised in that** it comprises, before the thermoforming step (104), a step (102) of selecting a toothed part (4) from several predetermined toothed parts (4) having different dimensions, the selected toothed part (4) being that having the geometry closest to the geometry of the first jaw (5).

3. The method according to claim 1 or claim 2, **characterised in that** it comprises after the bonding step (107), a step (109) of finishing the toothed part (4) with the connection part (3), a resin being disposed on empty spaces remaining between the toothed part (4) and the connection part (3).

4. The method according to any of the previous claims, **characterised in that** it comprises, after the repositioning step (108), a step (110) of rebasing the connection part (3).

5. The method according to any of claims 2 to 4, **characterised in that** it comprises, after the selecting step (102), and before the bonding step (107), a step (103) of pre-adapting the toothed part (4) to the second jaw (6) comprising:
• a phase of marking the toothed part (4) so as to identify artificial teeth (7) preventing a contact distributed over the whole toothed part (4) from being made, upon contacting the toothed part (4) on the model of the second jaw (6),
• a phase of reducing said artificial teeth (7).

6. A method for manufacturing a removable dental appliance (1), comprising the following steps:
• a step of manufacturing a first prosthesis (2) intended for a first jaw (5) according to any of claims 1 to 4, the first jaw (5) being an upper jaw,
• a step of manufacturing a second prosthesis intended for a second jaw (6) according to any of claims 1 to 4, the second jaw (6) being a lower jaw,
the method being **characterised in that** the repositioning step (108) comprises the following phases of:
• placing the first prosthesis on the first jaw (5) and/or the second prosthesis on the second jaw (6),
• plating an adjusting pan (22) against the toothed part (4) of the first prosthesis or second prosthesis.
